# FASCICULE DE BREVET EUROPEEN

(11) **EP 2 215 186 B1**
(45) Date de publication et mention de la délivrance du brevet: **13.07.2011**
(21) Numéro de dépôt: 08844627.3
(22) Date de dépôt: 27.10.2008
(51) Int. Cl.: C09K 11/78

(54) **COMPOSES LUMINESCENTS**
LUMINESZENTE VERBINDUNGEN
LUMINESCENT COMPOUNDS

(30) Priorité: 30.10.2007 FR 0758680
(43) Date de publication de la demande: 11.08.2010
(73) Titulaire: Saint-Gobain Glass France, 92400 Courbevoie (FR)
(72) Inventeur: CHEETHAM, Anthony K., Santa Barbara, California 93108 (US); BIRKEL, Alexander, 55118 Mainz (DE); HUIGNARD Arnaud, F-75018 Paris (FR); VERMERSCH, François-Julien, F-75014 Paris (FR)
(74) Mandataire: Teyssedre, Laurent
(86) Numéro de dépôt international: PCT/FR2008/051933
(87) Numéro de publication internationale: WO 2009/056753

(56) Documents cités:
- EP-A- 1 382 570
- G.K. CRUZ, H.C. BASSO, M.C. TERRILE, R.A. CARVALHO: "Spectroscopic properties of Y2BaZnO5:Er3+" JOURNAL OF LUMINESCENCE, vol. 86, 2000, pages 155-160, XP002482910
- G.K. CRUZ, H.C. BASSO, R.A. CARVALHO: "Energy assignments for the 4I15/2 and 4S3/2 multiplets of the Er3+ ion in (Er0.05Y0.95)2BaZnO5" JOURNAL OF APPLIED PHYSICS, vol. 89, no. 4, 15 février 2001 (2001-02-15), pages 2194-2200, XP002482911
- M.J.J. LAMMERS, H. DONKER, G. BLASSE: "The luminescence of Eu3+, Tb3+ and Tm3+ activated Gd2BaZnO5 and La2BaZnO5" MATERIALS CHEMISTRY AND PHYSICS, vol. 13, 1985, pages 527-539, XP002482912

## Description

La présente invention concerne le domaine des matériaux luminescents, en particulier des matériaux dits « up-conversion », capables d'émettre un rayonnement d'énergie plus élevée (de longueur d'onde plus courte) que celle du rayonnement incident.

La plupart des composés fluorescents ont la particularité, lorsqu'ils sont soumis à un rayonnement d'une longueur d'onde donnée, de réémettre un second rayonnement de longueur d'onde plus élevée, donc d'énergie plus faible que celle du rayonnement incident.

Il a toutefois été récemment découvert des composés, appelés composés « up-conversion », capables d'émettre un rayonnement d'énergie plus élevée que le rayonnement incident. Ce phénomène, qui s'explique par des absorptions successives de plusieurs photons par un même ion ou par des absorptions par des ions différents suivies de transferts d'énergie entre lesdits ions, est extrêmement rare. Il ne se produit en effet que pour quelques ions, en particulier des ions de terres rares ou de métaux de transition, lorsque ces derniers sont dans un environnement favorable. En outre, le rendement de luminescence associé est généralement très faible car la probabilité d'occurrence du phénomène est elle-même très faible. On définit le rendement de luminescence comme le rapport entre la quantité de lumière émise et la quantité de lumière nécessaire pour exciter le matériau.

Le phénomène qui permet d'obtenir les plus forts rendements est appelé « addition de photons par transferts d'énergie » (APTE) ou encore « energy transfer upconversion » (ETU). Ce phénomène met en oeuvre deux ions (identiques ou différents) initialement dans un niveau d'énergie excité et un transfert non-radiatif d'énergie entre ces deux ions.

La plupart des composés « up-conversion » sont des solides cristallisés du type oxyde ou halogénure (notamment fluorure) dopés par des ions lanthanides (aussi appelés « terres rares »). On connaît par exemple le composé Y₂O₃ dopé par des ions Er³⁺ qui permet de convertir des rayonnements dans le domaine du proche infrarouge en rayonnements dans le domaine du visible. Parmi les composés connus figure également le fluorure d'yttrium YF₃ dopé par des ions Yb³⁺ et Er³⁺ (noté YF₃ :Yb³⁺/Er³⁺).

L'invention a pour but de proposer de nouveaux composés up-conversion dont le rendement de luminescence est élevé.

A cet effet, l'invention a pour objet un composé choisi parmi les composés suivants : La₂BaZnO₅ :Er³⁺, Gd₂BaZnO₅:Er³⁺, Gd₂BaZnO₅:Yb³⁺/Er³⁺, Gd₂BaZnO₅ :Yb³⁺/Tm³⁺, des procédés d'obtention desdits composés, ainsi que l'utilisation de composés choisis parmi Y₂BaZnO₅:En³⁺, La₂BaZnO_{5:}Er³⁺, Gd₂BaZnO_{5:}Er³⁺, Gd₂BaZnO₅: Yb³⁺/Er³⁺, Gd₂BaZnO₅:Yb³⁺/Tm³⁺.

Par convention, le symbole « : » indique que l'ion qui suit ce symbole est intégré en tant que dopant à la structure du composé qui précède ledit symbole. Le terme de dopant ne doit pas être interprété au sens où la teneur en ion inséré dans la structure est nécessairement très faible. Le symbole « / » indique un co-dopage, c'est-à-dire un dopage par plusieurs ions. Comme indiqué dans la suite du texte, la teneur en dopants peut par exemple dépasser 20% en pourcentages molaires. Dans ces structures, l'ion dopant remplace partiellement l'ion Y³⁺, La³⁺ ou Gd³⁺.

Ces composés présentent un phénomène d'up-conversion au sens où ils sont capables de convertir un rayonnement dont la longueur d'onde est située dans l'infrarouge (typiquement 975 nm) en un rayonnement visible, principalement dans les domaines du vert (environ 550 nm) et du rouge (environ 660 nm). L'émission dans le rouge est nettement favorisée par le co-dopage avec l'ion Yb³⁺. Une émission dans le bleu peut également être obtenue par un co-dopage Yb³⁺/Tm³⁺. Le rendement de luminescence est élevé, et peut atteindre des valeurs supérieures à 1%, en particulier pour les composés Gd₂BaZnO₅ dopé Yb³⁺/Er³⁺.

L'invention a également pour objet les procédés d'obtention des composés selon l'invention.

Ces composés peuvent être obtenus par un procédé en phase solide, c'est-à-dire un procédé comprenant les étapes consistant à mélanger des poudres, typiquement des poudres d'oxydes ou de carbonates, à broyer le mélange, éventuellement à le presser pour former une pastille, puis à chauffer le mélange de manière à faire réagir chimiquement les poudres entre elles. Ce procédé s'est en particulier révélé avantageux pour les composés de matrice Ga₂BaZnO₅.

Les composés selon l'invention peuvent également être obtenus par un procédé du type sol-gel, comprenant les étapes consistant à dissoudre des précurseurs (typiquement des nitrates, acétates, ou encore carbonates) dans l'eau ou dans un solvant majoritairement aqueux, à ajouter un agent complexant (typiquement un acide α-hydroxycarboxylique tel que l'acide citrique) et éventuellement un agent réticulant (typiquement un polyhydroxyalcool tel que l'éthylèneglycol) de manière à obtenir un gel, puis à chauffer le gel obtenu, normalement à une température d'au moins 1000°C. Par rapport au procédé en phase solide, le procédé sol-gel permet généralement d'obtenir une meilleure homogénéité. Le chauffage à au moins 1000°C permet de s'affranchir des inconvénients liés à ce procédé, notamment une teneur en impuretés plus élevée (CO₂, eau...) qui engendre une probabilité d'occurrence de défauts structurels plus élevée.

L'invention a également pour objet l'utilisation des composés selon l'invention pour convertir un rayonnement en un rayonnement d'énergie plus élevée que celle du rayonnement incident, notamment pour convertir un rayonnement de longueur d'onde d'environ 975 nm en un rayonnement de longueur d'onde d'environ 550 nm et/ou 660 nm. Le rayonnement peut être cohérent ou non.

L'invention sera mieux comprise à la lecture des exemples qui suivent.

Pour tous les exemples, le phénomène d'up-conversion est caractérisé par la détermination, à l'aide d'un spectrophotomètre, du spectre d'émission du composé lorsqu'il est soumis à un rayonnement cohérent dont la longueur d'onde est de 975 nm (obtenu par un laser Ti :saphir pompé par un laser Ar⁺).

Le phénomène de luminescence up-conversion est également caractérisé par détermination du rendement de luminescence.

Pour ce faire, un rayonnement issu d'une diode laser, de longueur d'onde centrée autour de 975 nm, est focalisé et amené à traverser l'échantillon. L'intensité émise par l'échantillon est alors mesurée à l'aide d'une sphère intégrante, et ramenée à l'intensité absorbée par l'échantillon.

### EXEMPLE 1 : Y₂BaZnO₅ : Er³⁺

Un composé comprenant 5% molaires d'ion Er³⁺ dans une structure Y₂BaZnO₅ a été préparé par un procédé de type sol-gel.

Les précurseurs Y(NO₃)₃.6H₂O, Zn(NO₃)₂.6H₂O, BaNO₃ et Er(NO₃)₃.5H₂O ont été dissous dans de l'eau déionisée. Après chauffage à 70°C sous agitation afin de dissoudre les sels métalliques, de l'acide citrique a été ajouté de manière à ce que le rapport molaire métal : acide citrique soit de 1 :1, puis une solution de NH₄OH a été ajoutée à la solution obtenue afin d'obtenir un pH compris entre 7 et 9. Différentes étapes de chauffage ont ensuite permis d'évaporer l'eau (120°C puis 140°C), puis les résidus polymériques (150°C, puis 170°C, 250°C et enfin 600°C pendant 12h). La poudre obtenue a été broyée puis chauffée à 1000°C dans un creuset en alumine pendant 24h.

L'analyse par diffraction des rayons X révèle que la structure obtenue appartient au groupe d'espace orthorhombique Pbnm. Les paramètres de maille sont a = 0,70698 nm, b = 1,23368 nm et c = 0,57090 nm.

Soumis à un rayonnement incident et cohérent de longueur d'onde 975 nm, l'échantillon présente une luminescence verte assez forte, visible à l'oeil nu. L'émission est principalement centrée sur la longueur d'onde 550 nm, des émissions de moindre intensité étant centrées sur les longueurs d'onde 525 et 660 nm. L'émission à 550 nm est probablement due à une transition entre les niveaux ⁴S_{3/2} et ⁴I_{15/2} de l'ion Er³⁺. L'émission dans le rouge, beaucoup plus faible, est probablement due à une transition entre les niveaux ⁴F_{9/2} et ⁴I_{15/2}.

### EXEMPLE 2 : La₂BaZnO₅ : Er³⁺

Les composés 2A et 2B comprenant respectivement 5% et 10% molaires d'ion Er³⁺ dans une matrice La₂BaZnO₅, ont été préparés par voie sol-gel.

Les précurseurs La(NO₃)₃, Ba(NO₃)₂, Zn(NO₃)₂ et Er(NO₃)₃.5H₂O ont été dissous dans l'eau. Après chauffage sous agitation à 70°C, de l'acide citrique et de l'éthylène-glycol ont été ajoutés de manière à ce que les rapports molaires métal : acide citrique : éthylène-glycol soient de 1 :1 :2. Après évaporation de l'eau à 125°C, la mousse obtenue a été chauffée pendant plusieurs heures à 400°C afin de décomposer les matières organiques. La poudre obtenue a été enfin broyée et chauffée à environ 1100°C.

La structure obtenue appartient au groupe d'espace tétragonal 14/mcm. Les paramètres de maille de l'échantillon 2A sont a = 0,68987 nm et c = 1,15884 nm, tandis que ceux de l'échantillon 2B sont a = 0,68835 nm et c = 1,15760 nm.

Les échantillons présentent une forte émission dans le vert lorsqu'ils sont excités par un rayonnement cohérent de longueur d'onde 975 nm. L'émission à 550 nm est en particulier très intense, tandis que l'émission dans le rouge (660 nm), très faible, augmente avec la teneur en ions Er³⁺.

Le rendement de luminescence est de 0,06% pour l'échantillon 2A et de 0,10% pour l'échantillon 2B. Le rendement du composé connu Y₂O₃ :Er³⁺ est de l'ordre de 0,08%.

### EXEMPLE 3 : Gd₂BaZnO₅: Er³⁺ par voie solide

Les composés 3A, 3B et 3C, comprenant respectivement 3%, 5% et 10% molaires d'ions Er³⁺ dans une structure Gd₂BaZnO₅ ont été préparés par procédé en phase solide.

Les produits de départ (Gd₂O₃, ZnO, BaCO₃, Er₂O₃) ont été mélangés puis finement broyés ensemble dans un mortier en agate. Le mélange obtenu a ensuite été chauffé à l'air dans un creuset en alumine pendant 5 heures à 1200°C. Après un nouveau broyage, le même traitement thermique a été à nouveau appliqué.

La structure appartient au groupe d'espace orthorhombique Pbnm. Les paramètres de maille pour l'échantillon 3A sont a = 0,71568 nm, b = 1,24913 nm, c = 0,57724 nm. Pour l'échantillon 3B, a = 0,71561 nm, b = 1,24903 nm, c = 0,57721 nm. Pour l'échantillon 3C, a = 0,71540 nm, b = 1,24871 nm, c = 0,57705 nm. On observe donc une légère contraction de la maille lorsque l'ion Er³⁺ vient remplacer l'ion Gd³⁺.

Une émission verte est observée lorsque les échantillons sont exposés à un rayonnement cohérent de 975 nm de longueur d'onde. Les intensités d'émission à 550 nm et 525 nm varient peu en fonction de la teneur en dopants Er³⁺ ; en revanche, l'émission à 660 nm augmente fortement avec cette teneur.

### EXEMPLE 4 : Gd₂BaZnO₅ : Yb³⁺/Er3⁺ par voie solide

Les composés 4A, 4B et 4C, comprenant 1% molaire d'ions Er³⁺ et respectivement 5%, 10% et 20% molaires d'ion Yb³⁺ ont été obtenus par procédé en phase solide, de manière identique à l'exemple 3, le précurseur de l'ion Yb³⁺ étant Yb₂O₃.

La structure appartient au groupe d'espace orthorhombique Pbnm. Les paramètres de maille pour l'échantillon 4A sont a = 0,71501 nm, b = 1,24831 nm, c = 0,5695 nm. Pour l'échantillon 4B, a = 0,71420 nm, b = 1,24696 nm, c = 0,57636 nm. Pour l'échantillon 4C, a = 0,71248 nm, b = 1,24411 nm, c = 0,57509 nm.

Sous rayonnement cohérent à 975 nm de longueur d'onde, l'ion Yb³⁺ est excité depuis son état initial ²F_{7/2} jusqu'au niveau ^{Z}F_{5/2}, puis transfère son énergie à l'ion Er³⁺. L'augmentation de la teneur en ion Yb³⁺ a pour conséquence une augmentation très significative de l'émission à 660 nm, qui dépasse de loin l'émission à 525-550 nm, et l'apparition d'une très faible émission dans le bleu, autour de 410 nm, due à un phénomène impliquant 3 photons et générant une transition du niveau ²H_{9/2} vers le niveau ⁴I_{15/2}. Tandis que l'échantillon 4A présente une luminescente verte à l'oeil nu, l'échantillon 4B émet globalement dans l'orange, et l'échantillon 4C dans le rouge. La présence de l'ion Yb³⁺ a donc pour effet de promouvoir très nettement l'émission dans le rouge, au détriment de l'émission dans le vert, probablement grâce aux transferts d'énergie qui permettent de peupler le niveau ⁴F_{9/2}. Le rapport entre l'intensité d'émission dans le rouge et l'intensité d'émission dans le vert varie en effet de plus de 2 à presque 14 entre l'échantillon 4A et l'échantillon 4C. Comme la sensibilité de l'oeil humain est beaucoup plus forte dans le vert, la lumière émise par l'échantillon 4A paraît toutefois globalement verte à l'oeil nu.

Le rendement de luminescence est particulièrement élevé, puisqu'il est d'environ 0,6-0,7% pour les échantillons 4A et 4C et de 1,35% pour l'échantillon 4B.

### EXEMPLE 5 : Gd₂BaZnO₅ : Er³⁺ par voie sol-gel

Les composés 5A, 5B et 5C, comprenant respectivement 1%, 5% et 10% molaires d'ions Er³⁺ dans une matrice Gd₂BaZnO₅, ont été préparés par voie sol-gel.

La méthode employée est similaire à celle décrite pour l'exemple 2, le précurseur de Gd étant Gd(NO₃)₃.6H₂O.

La structure appartient au groupe d'espace orthorhombique Pbnm. Les paramètres de maille pour l'échantillon 5A sont a = 0,71555 nm, b = 1,24919 nm, c = 0,57732 nm. Pour l'échantillon 5B, a = 0,71520 nm, b = 1,24855 nm, c = 0,57702 nm. Pour l'échantillon 5C, a = 0,71457 nm, b = 1,24772 nm, c = 0,57661 nm.

La luminescence « up-conversion » de ces échantillons est encore plus élevée à l'oeil nu que celle obtenue dans le cas des échantillons obtenus par voie solide (exemple 3).

Le rendement de luminescence est de l'ordre de 0,02% à 0,03% pour les trois échantillons.

### EXEMPLE 6 : Gd₂BaZnO₅ : Yb³⁺/Er³⁺ par voie sol-gel

Les composés 6A, 6B et 6C, comprenant 1% molaire d'ion Er³⁺ et respectivement 5%, 10% et 20% molaires d'ions Er³⁺ dans une matrice Gd₂BaZnO₅, ont été préparés par voie sol-gel.

La méthode employée est similaire à celle décrite pour l'exemple 2, le précurseur de Gd étant Gd(NO₃)₃.6H₂O.

La structure appartient au groupe d'espace orthorhombique Pbnm. Les paramètres de maille pour l'échantillon 6A sont a = 0,71504 nm, b = 1,24813 nm, c = 0,57684 nm. Pour l'échantillon 6B, a = 0,71406 nm, b = 1,24667 nm, c = 0,57619 nm. Pour l'échantillon 6C, a = 0,71287 nm, b = 1,24485 nm, c = 0,57539 nm.

Le rendement de luminescence varie d'environ 0,2% à environ 0,5% en fonction de l'échantillon, l'échantillon 6B présentant l'efficacité la plus forte.

Comme pour l'exemple 4, la présence d'ions Yb³⁺ a pour effet de favoriser très nettement l'intensité d'émission dans le rouge (660 nm) au détriment de celle dans le vert (525-550 nm). Le rapport entre l'intensité d'émission dans le rouge et l'intensité d'émission dans le vert varie de 2 à 9 entre l'échantillon 4A et l'échantillon 4C.

## Revendications

1. Composé choisi parmi les composés de formule La₂BaZnO₅ :Er³⁺, Gd₂BaZnO₅ :Er³⁺, Gd₂BaZnO₅ :Yb³⁺/Er³⁺, Gd₂BaZnO₅ :Yb³⁺/Tm³⁺.

2. Composé selon la revendication 1, de formule Gd₂BaZnO₅ dopé Yb³⁺/Er³⁺.

3. Procédé d'obtention des composés selon l'une des revendications précédentes, comprenant les étapes consistant à mélanger des poudres, à broyer le mélange, puis à chauffer le mélange de manière à faire réagir chimiquement les poudres entre elles.

4. Procédé d'obtention des composés selon l'une des revendications 1 et 2, comprenant les étapes consistant à dissoudre des précurseurs, notamment des nitrates, acétates, ou encore carbonates, dans l'eau ou dans un solvant majoritairement aqueux, à ajouter un agent complexant, notamment un acide α-hydroxycarboxylique tel que l'acide citrique et éventuellement un agent réticulant, notamment un polyhydroxyalcool tel que l'éthylèneglycol de manière à obtenir un gel, puis à chauffer le gel obtenu à une température d'au moins 1000°C.

5. Utilisation de composés choisis parmi Y₂BaZnO₅ :Er³⁺, La₂BaZnO₅ :Er³⁺, Gd₂BaZnO₅ :Er³⁺, Gd₂BaZnO₅ :Yb³⁺/Er³⁺, Gd₂BaZnO₅ :Yb³⁺/Tm³⁺ pour convertir un rayonnement en un rayonnement d'énergie plus élevée que celle du rayonnement incident, notamment pour convertir un rayonnement de longueur d'onde d'environ 975 nm en un rayonnement de longueur d'onde d'environ 550 nm et/ou 660 nm.

## Claims

1. A compound chosen from compounds of formula La₂BaZnO₅:Er³⁺, Gd₂BaZnO₅:Er³⁺, Gd₂BaZnO₅:Yb³⁺/Er³⁺, Gd₂BaZnO₅:Yb³⁺/Tm³⁺.

2. The compound as claimed in claim 1, of formula Gd₂BaZnO₅ doped with Yb³⁺/Er₃⁺.

3. A method for obtaining compounds as claimed in one of the preceding claims, comprising steps consisting of mixing the powders, of grinding the mixture, and then of heating the mixture so as to cause the powders to react together chemically.

4. A method for obtaining compounds as claimed in either claim 1 or 2, comprising steps consisting of dissolving precursors, notably nitrates, acetates or carbonates, in water or in a mainly aqueous solvent, of adding a complexing agent, notably an α-hydroxycarboxylic acid such as citric acid, and possibly a cross-linking agent, notably a polyhydroxyalcohol such as ethylene glycol, so as to obtain a gel and then of heating the gel obtained at a temperature of at least 1000°C.

5. The use of compounds chosen from Y₂BaZnO₅:Er³⁺, La₂BaZnO₅:Er³⁺, Gd₂BaZnO₅:Er³⁺, Gd₂BaZnO₅:Yb³⁺/Er³⁺, Gd₂BaZnO₅:Yb³⁺/Tm³⁺ for converting radiation into radiation with a higher energy level than that of the incident radiation, notably in order to convert radiation with a wavelength of approximately 975 nm into radiation with a wavelength of approximately 550 nm and/or 660 nm.

## Patentansprüche

1. Verbindung, die aus den Verbindungen der Formel La₂BaZnO₅ :Er³⁺, Gd₂BaZnO₅:Er³⁺, Gd₂BaZnO₅:Yb³⁺/Er³⁺, Gd₂BaZnO₅ :Yb³⁺/Tm³⁺ ausgewählt ist.

2. Verbindung nach Anspruch 1, der Formel Yb³⁺/Er³⁺-dotiertes Gd₂BaZnO₅.

3. Verfahren zum Erhalten der Verbindungen nach einem der vorstehenden Ansprüche, das die Schritte umfasst, die darin bestehen, Pulver zu mischen, das Gemisch zu mahlen, anschließend das Gemisch zu erhitzen, um die Pulver chemisch miteinander reagieren zu lassen.

4. Verfahren zum Erhalten der Verbindungen nach einem der Ansprüche 1 und 2, das die Schritte umfasst, die darin bestehen, Vorläufer, insbesondere Nitrate, Acetate oder aber Carbonate in Wasser oder in einem hauptsächlich wässrigen Lösungsmittel zu lösen, einen Komplexbildner, insbesondere eine α-Hydroxycarbonsäure, wie Citronensäure, und eventuell ein Vernetzungsmittel, insbesondere einen Polyhydroxyalkohol, wie Ethylenglykol zuzugeben, um ein Gel zu erhalten, dann das erhaltene Gel auf eine Temperatur von wenigstens 1000 °C zu erhitzen.

5. Verwendung von Verbindungen, ausgewählt aus Y₂BaZnO₅ :Er³⁺, La₂BaZnO₅ :Er³⁺, Gd₂BaZnO₅ :Er³⁺, Gd₂BaZnO₅ :Yb³⁺/Er³⁺,
Gd₂BaZnO₅ :Yb³⁺/Tm³⁺, um eine Strahlung in eine Strahlung mit höherer Energie als die einfallende Strahlung umzuwandeln, insbesondere um eine Strahlung mit einer Wellenlänge von etwa 975 nm in eine Strahlung mit einer Wellenlänge von etwa 550 nm und/oder 660 nm umzuwandeln.
